Europäisches Patentamt

European Patent Office

Office européen des brevets

(11) Veröffentlichungsnummer: **0 330 085**
**A2**

## (12) EUROPÄISCHE PATENTANMELDUNG

(21) Anmeldenummer: 89102746.8

(22) Anmeldetag: 17.02.89

(51) Int. Cl.⁴: **B23P 13/00**

(30) Priorität: 25.02.88 DE 3805865

(43) Veröffentlichungstag der Anmeldung:
30.08.89 Patentblatt 89/35

(84) Benannte Vertragsstaaten:
**DE FR GB IT SE**

(71) Anmelder: VOLKSWAGEN
AKTIENGESELLSCHAFT

**D-3180 Wolfsburg(DE)**

(72) Erfinder: **Bialobrzeski, Reinhold, Dipl.-Ing.**
**Amselweg 2a**
**D-3181 Danndorf(DE)**
Erfinder: **Emmenthal, Klaus-Dieter, Dr.**
**Breslauer Strasse 271**
**D-3180 Wolfsburg 1(DE)**
Erfinder: **Schäfer, Otto, Ing.(grad.)**
**Stralsunder Ring 74**
**D-3180 Wolfsburg 1(DE)**
Erfinder: **Schröder, Dieter**
**Lewerberg 7**
**D-3384 Liebenburg 1(DE)**
Erfinder: **Buchwald, Günter**
**Gablonzer Strasse 31**
**D-3320 Salzgitter 51(DE)**

(54) Verfahren zum Herstellen einer aus zwei miteinander im eingriff befindlichen Bauteilen bestehenden Maschine, insbesondere einer nach dem Spiralprinzip arbeitenden Verdrängermaschine.

(57) Die Erfindung betrifft ein Verfahren zum Herstellen einer aus zwei miteinander im Eingriff befindlichen Bauteilen bestehenden Maschine, wobei die während des Betriebes der Maschine sich relativ zueinander bewegenden Bauteile Wandbereiche (2, 3) und zwischen diesen befindliche, durch Materialabtrag gewonnene Ausnehmungen (4) aufweisen. Zwecks Erreichung einer hohen Fertigungsgenauigkeit bei geringem Zeitaufwand soll der Materialabtrag in jedem der Bauteile (1) mittels eines Werkzeuges (5) erfolgen, welches die Relativbewegung des jeweils anderen Bauteils simuliert.

Fig.1

## Verfahren zum Herstellen einer aus zwei miteinander im Eingriff befindlichen Bauteilen bestehenden Maschine, insbesondere einer nach dem Spiralprinzip arbeitenden Verdrängermaschine

Die Erfindung betrifft ein Herstellungsverfahren für eine im Oberbegriff des Patentanspruchs näher beschriebene Maschine.

Derartige Maschinen werden beispielsweise als Verdrängermaschinen für kompressible Medien verwendet und im Motorenbau zur Aufladung, also zur Leistungssteigerung eingesetzt. Eine solche Verdrängermaschine arbeitet in bekannter Weise nach dem Spiralverfahren. Sie besteht im wesentlichen aus einem Gehäuse, einem Verdrängerkörper und einer Antriebswelle mit einem Exzenter. Gehäuse und Verdrängerkörper weisen jeweils spiralförmig verlaufende Wände auf, die zwischen sich - ebenfalls spiralförmige - Kammern einschließen, und sind in der Weise zusammengesetzt, daß die spiralförmige Wand des Verdrängerkörpers die spiralförmige Kammer des Gehäuses in einen inneren und einen äußeren Arbeitsraum unterteilt. In diesen Arbeitsräumen, deren Volumen infolge der exzentrischen Lagerung des Verdrängerkörpers durch Drehung der Antriebswelle veränderbar ist, wird das am Eingang angesaugte Medium, beispielsweise Luft, verdichtet und am Ausgang ausgeschoben.

Der Gütegrad der Verdrängermaschine hängt nun wesentlich von der gegenseitigen Abdichtung der beiden Arbeitsräume ab, die ja darauf beruht, daß das Spaltmaß zwischen der Spiralwand des Verdrängerkörpers und der des Gehäuses möglichst klein ist. Diese Forderung ist um so schwieriger einzuhalten, weil die Dichtstelle nicht ortsfest ist, sondern mit jedem Arbeitsspiel entlang der Spirale des Verdrängerkörpers wandert. Wie man sieht, kommt es bei der Bearbeitung der "Spiralkörper", also des Verdrängerkörpers und des Gehäuses, nicht nur auf die Einhaltung sehr kleiner Toleranzen an sich an, sondern vielmehr auch darauf, daß das Zusammenspiel der beiden Bauteile gerade im Hinblick auf ein verschwindend kleines Spaltmaß gewährleistet ist. Ausgehend von entsprechenden Rohlingen mit grob vorgefertigten Spiralkonturen (gegossen oder gefräst), erfolgt bisher die Feinbearbeitung der Spiralkonturen durch Fräsen mit Standard- oder Hochgeschwindigkeit. Die erforderliche hohe Genauigkeit wird dabei durch gegebenenfalls mehrfaches Abfahren der Kontur erzielt, weil zur Vermeidung von Verformungen am Werkstück nur eine relativ geringe Schnittiefe gewählt werden darf. Dieses Verfahren ist offensichtlich zeitaufwendig.

Der Erfindung liegt daher die Aufgabe zugrunde, ein Herstellungsverfahren für eine im Oberbegriff des Patentanspruchs beschriebene Maschine zu entwickeln, das es erlaubt, eine solche Maschine mit der erforderlichen Präzision bei relativ kurzer Bearbeitungszeit zu fertigen.

Diese Aufgabe wird erfindungsgemäß dadurch gelöst, daß der Materialabtrag in jedem der Bauteile mittels eines Werkzeuges erfolgt, welches die Relativbewegung des anderen Bauteils simuliert. Dabei ist es durchaus möglich, daß die Anwendung des erfindungsgemäßen Verfahrens sich auf die Feinbearbeitung der Bauteile beschränkt. Im Falle der Bearbeitung der Spiralkonturen einer Verdrängermaschine beispielsweise kann man die Spiralkonturen zunächst grob vorfräsen; dann wird ein als Werkzeug ausgebildeter Verdrängerkörper bzw. ein als Werkzeug ausgebildetes Gehäuse, das dieselbe Bewegung wie das eigentliche Fertigteil ausführt, für die Fertigbearbeitung verwendet.

Auf diese Weise werden die Spiralkonturen den wirklichen Erfordernissen optimal angepaßt.

Der Materialabtrag kann spanabhebend, z. B. durch Fräsen oder Schleifen, oder elektrochemisch erfolgen.

Ein Ausführungsbeispiel der Erfindung wird anhand einer Zeichnung nachstehend näher erläutert. Darin zeigen

Figur 1 in schematischer Darstellung die Draufsicht auf ein spiralförmiges Werkstück und einen Querschnitt durch ein ebenfalls spiralförmiges Werkzeug
und

Figur 2 einen vergrößerten Ausschnitt aus der Anordnung nach Figur 1, jedoch mit einer Phasenverschiebung von etwa 90$^\circ$ gegenüber der in Figur 1 gezeigten Stellung.

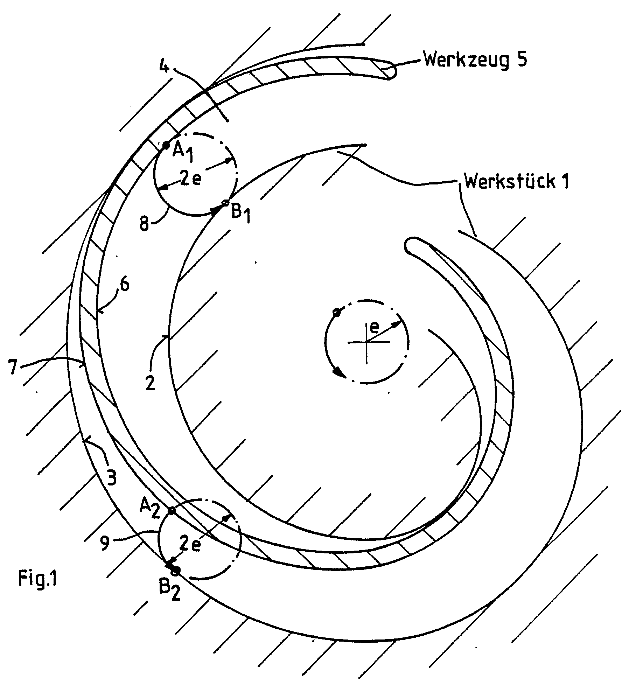

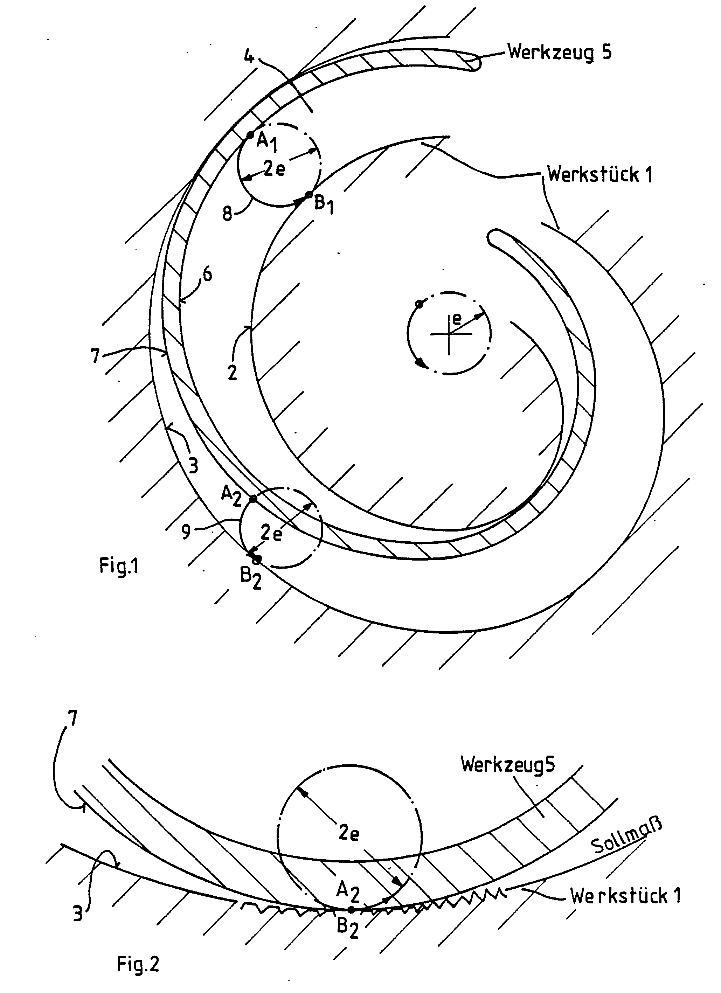

Ein fest eingespanntes Werkstück 1 enthält zwischen zwei äquidistant verlaufenden Wandbereichen 2 und 3 einen spiralförmigen Kanal 4, in den ein der Geometrie des Kanals besonders angepaßtes Werkzeug 5 eintaucht, das ebenfalls spiralförmig ausgebildet ist. Die innere und äußere Oberfläche 6 und 7 des Werkzeugs 5 ist nach Art einer Schleifeinrichtung ausgeführt, d. h. das Werkzeug 5 ist in der Lage, von dem Werkstück 1, wenn es unter Druck daran vorbeigeführt wird, Material abzutragen. Das Werkzeug 5 ist so gelagert, daß es - über eine nicht gezeichnete Antriebswelle in Rotation versetzt - eine exzentrische Drehbewegung mit der Exzentrizität e ausführt, jeder Punkt des Werkzeuges beschreibt dann einen Kreis vom Durchmesser 2e. Während dieser Drehbewegung wandert beispielsweise der an der inneren Oberfläche 6 des Werkzeugs 5 gelegene Punkt $A_1$ längs des Kreisbogens 8 und berührt in $B_1$ die innere Kanalwand 2, wobei dort eine überstehende Materialmenge abgetragen, z. B. abgeschliffen, wird. Entsprechend wandert der auf der äußeren Oberfläche 7 des Werkstücks 1 gelegene Punkt A$_2$ auf dem Kreisbogen 9 entlang und trifft in B$_2$ auf die äußere Kanalwand 3. Auch dabei wird überstehendes Material abgetragen, wie es deutlicher aus Figur 2 zu ersehen ist. Nachdem das Werkzeug 5 einen Weg von 360° zurückgelegt hat, was damit gleichbedeutend ist, daß jeder Punkt des Werkzeugs 5 einen Vollkreis beschrieben hat, ist also ein gewisser Materialüberstand von beiden Kanalwänden 2, 3 abgetragen worden. Ist das Sollmaß damit noch nicht erreicht, muß das Arbeitsspiel mit vergrößerter Exzentrizität wiederholt werden.

Da während der Bearbeitung das Werkzeug 5 genau die Bewegung beschreibt wie das spätere Gegenstück zum Werkstück 1, ist gewährleistet, daß der Zusammenbau von Werkstück und Gegenstück, welches prinzipiell genauso bearbeitet worden ist, ein minimales und gleichbleibendes Spaltmaß als Voraussetzung für einen hohen Gütegrad aufweist.

Das erfindungsgemäße Bearbeitungsverfahren ist selbstverständlich nicht an eine bestimmte Ausführungsform gebunden; insbesondere sind verschiedene Möglichkeiten der Lagerung des Werkzeuges denkbar.

## Ansprüche

Verfahren zum Herstellen einer im wesentlichen aus zwei korrespondierenden, im Zusammenbauzustand miteinander im Eingriff befindlichen Bauteilen bestehenden Maschine, wobei die während des Betriebes der Maschine sich relativ zueinander bewegenden Bauteile Wandbereiche und zwischen diesen befindliche, durch Materialabtrag gewonnene Ausnehmungen aufweisen, in die die Wandbereiche des jeweils anderen Bauteils hineinragen, insbesondere zum Herstellen einer nach dem Spiralprinzip arbeitenden Verdrängermaschine für kompressible Medien mit einem Verdrängerkörper und einem Gehäuse, dadurch gekennzeichnet, daß der Materialabtrag in jedem der Bauteile (1) mittels eines Werkzeuges (5) erfolgt, welches die Relativbewegung des anderen Bauteils simuliert.

Fig.1

Werkzeug 5

Werkstück 1

4

A₁

2e

8

B₁

6

7

2

e

3

A₂

9

2e

B₂

Fig.1

7

Werkzeug5

2e

Sollmaß

A₂

B₂

Werkstück 1

3

Fig.2

Volkswagen AG Wolfsburg

K 4295